# FASCICULE DE BREVET EUROPEEN

(11) **EP 2 440 903 B1**
(45) Date de publication et mention de la délivrance du brevet: **20.11.2013**
(21) Numéro de dépôt: 10737978.6
(22) Date de dépôt: 09.06.2010
(51) Int. Cl.: G01M 3/28

(54) **DISPOSITIF DE DÉTECTION DE FUITE D'EAU**
VORRICHTUNG ZUR ERKENNUNG VON WASSERLECKS
DEVICE FOR DETECTING A WATER LEAK

(30) Priorité: 09.06.2009 FR 0902772
(43) Date de publication de la demande: 18.04.2012
(73) Titulaire: Mavridoglou, Christian, 34770 Gigean (FR)
(72) Inventeur: Mavridoglou, Christian, 34770 Gigean (FR)
(74) Mandataire: Rhein, Alain
(86) Numéro de dépôt international: PCT/FR2010/051147
(87) Numéro de publication internationale: WO 2010/142915

(56) Documents cités:
- EP-A1- 0 930 492
- FR-A1- 2 573 868
- FR-A1- 2 690 525
- FR-A1- 2 865 804
- US-A- 3 695 094
- US-A- 5 343 737
- US-A- 5 377 529
- Hydroméca-SA: "Catalogue Hydromeca, "La chaine de l'eau", tarif 2008" 2 janvier 2008 (2008-01-02), XP002561950 Extrait de l'Internet: URL:http://81.93.5.163/hydromeca_joomla/ca talogues/hydromeca%202008.swf [extrait le 2010-01-05]

## Description

La présente invention entre dans le domaine des dispositifs de détection de fuite dans un réseau d'approvisionnement en eau.

L'invention concerne plus particulièrement un dispositif de détection d'une fuite d'eau dans un réseau, comprenant une électrovanne, un compteur d'eau, un émetteur d'impulsions conçu apte à transmettre des informations, lues sur ledit compteur, à un automate programmable, ce dernier comportant un compteur de temps.

L'invention concerne encore un procédé de mise en oeuvre d'un tel dispositif de détection de fuite dans un réseau d'approvisionnement en eau.

Il est connu, tout particulièrement du document FR 2 573 868 un dispositif de sécurité pour détecter et limiter les fuites dans une canalisation comprenant deux parties, tout d'abord une partie mesure, constituée par un compteur volumétrique, comprenant une roue à aube et un capteur, placé en amont du circuit à protéger. Le capteur transmet un signal à la seconde partie du dispositif lorsque les pâles de la roue passent devant lui. La deuxième partie est une unité de traitement du signal émis par le capteur et un comparateur d'impulsions. En effet si l'écart entre deux impulsions s'agrandit ou se réduit par rapport à un seuil prédéfini le dispositif va déclencher une minuterie et un décompteur, et selon le cas va arrêter le dispositif en agissant sur une électrovanne. Ce dispositif est également muni de voyant d'alerte pour informer les utilisateurs des éventuels problèmes.

Ce dispositif nécessite dans son fonctionnement de connaître au préalable le débit dans la canalisation, afin de pouvoir régler le seuil, et ne permet donc pas une variation très importante de celui.

Il est encore connu au travers du document FR 2 865 804 un dispositif d'indication du niveau de fuite équipé de plusieurs moyens de temporisations installés sur un réseau de distribution d'eau. Ces moyens de temporisations comprennent, pour une valeur de débit, une temporisation courte, qui peut également être appelée temporisation de récurrence, et une temporisation longue, appelée temporisations d'alarme. La temporisation courte permet la répétition de la fuite, tandis que la temporisation longue permet quant à elle, en cas de répétition de la temporisation courte, de prévenir d'une fuite d'eau sur le réseau d'eau au bout d'un temps fixé.

Un tel dispositif présente un premier inconvénient lié au fait que lesdites temporisations courte et longue se présentent sous la forme de compteurs montés en série l'un à la suite de l'autre sur un même réseau. Dès lors, en cas de débit élevé au sein dudit réseau, toutes les paires de temporisations fonctionnent simultanément, les paires dédiées à un débit moindre fonctionnant inutilement.

De plus, les temporisations présentent des valeurs fixes du débit d'écoulement au sein du réseau. Dès lors, en cas d'ouverture et de fermeture fréquente de robinets sur le réseau, ainsi qu'une ouverture partielle de tels robinets, engendre une détection erronée de fuite, alors qu'il n'y a pas lieu d'être.

La présente invention a pour but de proposer un dispositif de détection d'une fuite d'eau dans un réseau, permettant de remédier à ces inconvénients, notamment au déclenchement intempestifs de ces dispositifs de l'état de la technique.

Ainsi l'invention concerne un dispositif de détection d'une fuite d'eau dans un réseau, comprenant un compteur d'eau, un émetteur d'impulsions conçu apte à transmettre des informations, lues sur ledit compteur, à des moyens de traitement des données, caractérisé par le fait que lesdits moyens de traitement des données comportent d'une part au moins deux compteurs d'impulsions conçus aptes à fonctionner selon une valeur donnée de débit du réseau, et d'autre part des moyens de mesure dudit débit du réseau aptes à permettre de sélectionner le compteur adapté au débit mesuré.

Selon une autre caractéristique de l'invention, les moyens de mesure du débit du réseau consistent en un compteur de temps conçu apte à mesurer le temps d'une impulsion d'une quantité consommée, tandis que lesdits moyens de traitement des données consistent en des moyens conçus aptes à sélectionner le compteur en fonction de cette mesure de temps puis à comparer ladite mesure de temps avec une valeur en mémoire qui consiste en à la valeur de temps de l'impulsion précédente augmentée d'un delta.

Selon une autre caractéristique de l'invention, les moyens de traitement des données sont constitués par un automate programmable comportant au moins sept compteurs d'impulsions chacun associé à une valeur donnée du débit du réseau.

L'invention concerne encore un procédé de mise en oeuvre du dispositif caractérisé par le fait qu'il consistent en ce que :
- on mesure le temps (t) d'une impulsion correspondant une quantité consommée ;
- on sélectionne le compteur (11 à 17) correspondant à cette valeur de ce temps (t) ;
- on compare cette valeur de temps (t) à une valeur de temps stockée dans une mémoire (M10);
- soit la valeur de temps (t) est inférieure ou égale à cette valeur mémoire (M10), et on incrémente le compteur (11 à 17) correspondant de la quantité consommée et on sauvegarde la valeur de temps (t) dans la mémoire (M10);
- soit la valeur de temps (t) est supérieure à cette valeur mémoire (M10), et on sauvegarde la valeur de temps (t) dans la mémoire (M10) qui sert au calcul de la valeur référence de la prochaine mesure de temps (t) de l'impulsion

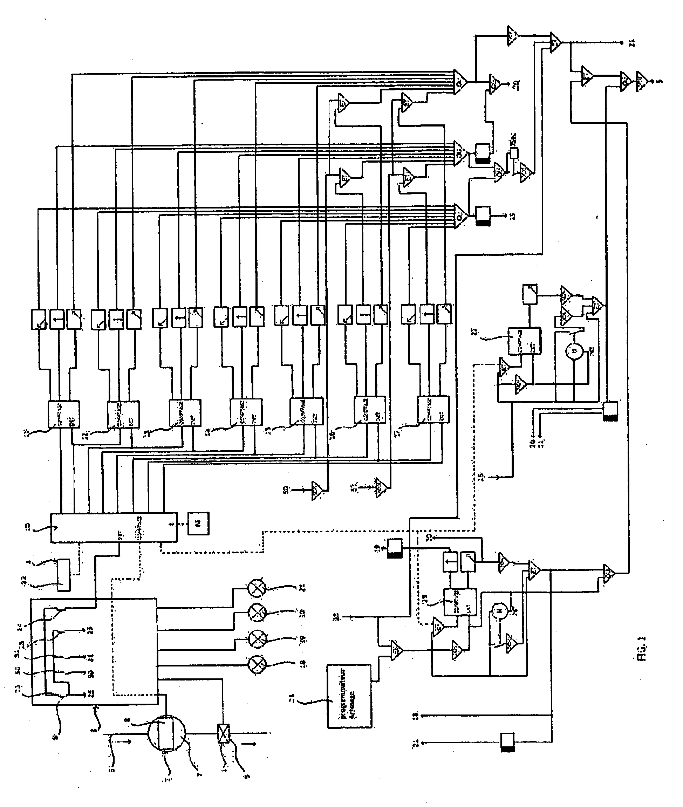

Les avantages et les caractéristiques du dispositif selon l'invention, ressortiront plus clairement de la description qui suit et qui se rapporte au dessin annexé, lequel en représente un mode de réalisation non limitatif.

Dans le dessin annexé la figure unique représente un schéma logique du dispositif selon l'invention.

On notera que pour des raisons de facilité de lecture du schéma les sorties des compteurs sont reportées.

L'invention trouvera une application toute particulière dans la surveillance d'un réseau de fluide, en particulier d'un réseau domestique d'approvisionnement en eau, auprès de particuliers, notamment un réseau d'arrosage automatique.

Ainsi elle concerne un dispositif de détection de fuite d'eau, installé en amont du réseau d'approvisionnement, le plus près possible de l'arrivée générale. Un tel dispositif comporte un moyen d'ouverture/fermeture 1 du débit général dudit réseau, des moyens 2 pour mesurer le débit présent (ou s'écoulant au sein du réseau), des moyens 3 pour le traitement des données mesurées et des moyens 4 pour l'affichage de ces données.

Le moyen 1 d'ouverture/fermeture est plus particulièrement constitué par au moins une vanne motorisée ou préférentiellement une électrovanne 5. Cette électrovanne 5 peut être installée lors du montage du dispositif sur un réseau d'approvisionnement 6.

Avantageusement, dans le cas où le réseau 6 d'eau dispose déjà d'une vanne, le dispositif permet de venir fixer sur le carré de cette vanne une motorisation adaptée permettant de la piloter.

Selon un mode de réalisation de l'invention les moyens 2 pour mesurer le débit du réseau 6 sont constitués d'un compteur d'eau 7 équipé d'un totalisateur dont l'aiguille est munie d'une cible et sur lequel on vient raccorder, par des moyens adaptés, un émetteur d'impulsions 8.

A chaque litre consommé, le compteur 7 transmet une impulsion, par l'intermédiaire de l'émetteur d'impulsions 8, aux moyens 3 pour le traitement des données. Cette transmission peut s'effectuer de manière filaire ou hertzienne.

Préférentiellement, si le réseau 6 est déjà équipé d'un tel compteur d'eau 7, le dispositif comprend un raccordement adapté pour la fixation de l'émetteur d'impulsions 8 sur le compteur d'eau 7.

Selon un premier mode de réalisation, les moyens 3 pour le traitement des données peuvent être constitués préférentiellement par un automate programmable 9 ou également se présenter sous la forme d'un circuit logique figé, programmable. Cet automate programmable 9 comprend plusieurs entrées et sorties, ces dernières recevant les impulsions émises depuis le compteur d'esu 7. L'automate 9 comprend au moins un compteur de temps 10 mesurant le temps d'une impulsion, celui-ci étant relié, par son entrée, à la sortie de l'émetteur d'impulsions 8, et par sa sortie à l'entrée d'au moins deux compteurs d'impulsions 11, 12. Chaque impulsion comptabilisée par les compteurs 11, 12 est équivalente à un litre d'eau et donc ces compteurs 11, 12 peuvent être considérés comme des compteurs de volume de l'eau consommée à différents débits.

La sortie de ces compteurs 11, 12 est reliée à un réseau de portes logiques agissant sur l'électrovanne 5 ou sur les moyens d'affichage 4. Chacun de ces compteurs 11, 12 comportent trois valeurs de seuil sauvegardées dans une mémoire M propre à chacun et réglable par un utilisateur ou un opérateur, sur site ou à distance.

Les seuils sont respectivement un seuil de fuite S1, un seuil d'alarme/coupure S2 prévenant d'une fermeture imminente du dispositif et un seuil de coupure S3 du dispositif qui ferme l'électrovanne 5.

Selon l'invention, l'automate programmable comporte en particulier sept compteurs d'impulsions 11, 12, 13, 14, 15, 16, 17. Chacun de ces compteurs d'impulsions 11 à 17 représente un débit respectivement du plus fort au plus faible et sont sélectionnés par le compteur de temps 10 en fonction de la valeur de temps (t) d'une impulsion. Le dispositif peut mesurer de très gros débits, plusieurs milliers de litres par heure, comme de très petits débits de l'ordre de 1 litre par heure.

Selon un second mode de réalisation de l'invention, les moyens 3 de traitement peuvent être constitués d'un ensemble de cartes électroniques avec un programme figé effectuant les mêmes opérations que l'automate programmable 9.

Selon un mode d'exécution particulier, les moyens d'affichage 4 sont incorporés à l'automate programmable 9 et se présentent sous la formes de plusieurs voyants 19, 20, 21 et d'un afficheur LCD 22 permettant de visualiser les diverses alarmes et l'état du dispositif. Les voyants 19, 20, 21 comprennent un voyant de fuite 19, un voyant d'alarme/coupure 20 et un voyant de surveillance 21.

Préférentiellement les moyens d'affichage 4 comportent encore des boutons poussoir de type marche/arrêt 23, reset 24, et marche forcée 25 du dispositif.

Avantageusement le dispositif peut comporter un voyant 18 pour signaler le départ d'un cycle d'arrosage automatique de jardin de particulier ou collectif.

Tout particulièrement l'afficheur LCD affiche l'état du dispositif en fonction des voyants 18, 19, 20, 21 qui sont activés.

Selon un mode préférentiel de l'invention, les moyens d'affichage 4 sont déportés par rapport au moyen d'ouverture/fermeture 1, aux moyens de mesure 2 et aux moyens 3 de traitement des données. En particulier, ces moyens d'affichage 4 sont déportés et placés dans un local technique facile d'accès pour les utilisateurs ou les opérateurs pour permettre à ceux-ci de pouvoir effectuer les réglages du dispositif.

Préférentiellement, ces moyens d'affichage 4 peuvent être connectés à distance au reste du dispositif par une liaison filaire ou sans fil.

Lorsque que l'installation du dispositif est terminée il est dans un état arrêté, l'électrovanne 5 du dispositif est alimentée (fermée) et donc bloque le passage de l'eau dans le réseau 6.

Selon un mode d'exécution préféré de l'invention l'électrovanne 5 est normalement ouverte (non alimentée) et on l'alimente, lors d'un arrêt ou d'une coupure de sécurité, pour procéder à sa fermeture.

Lors de l'appui de l'utilisateur ou de l'opérateur sur le bouton poussoir marche/arrêt, l'électrovanne 5 n'est plus alimentée (ouverte), une indication « surveillance » s'affiche sur l'afficheur LCD 22 et un premier voyant surveillance 21 s'allume.

Le dispositif est alors dans un état de fonctionnement normal.

L'eau s'écoule alors dans le réseau 6 et à chaque litre d'eau consommé le compteur d'eau 7 envoie une impulsion, via l'émetteur d'impulsions 8, à l'automate programmable 9 qui va traiter ces impulsions, les interpréter et réagir en fonction de celles-ci.

L'impulsion arrive dans le compteur de temps 10 comportant une variable de comptage du temps (t) T1.

Ainsi, en fonction de cette valeur de temps (t) ce compteur 10 sélectionne et attribue un litre d'eau consommé au compteur d'impulsions 11 à 17 correspondant. En effet les différents compteurs 11 à 17 d'impulsions sont réglés suivant ce temps (t) et donc en fonction du débit dans le réseau. Plus particulièrement chaque compteur (11 à 17) couvre une plage de débit correspondant à une plage de temps (t) dans laquelle il son sélectionné par le compteur 10 de manière à permettre une intervention rapide et adapté pour chaque débit.

D'ailleurs, on remarquera que pour éviter les détections de fuites intempestives du dispositif, le litre consommé n'est comptabilisé par le compteur (11 à 17) qu'après la comparaison de la valeur de T1 avec une valeur mémoire de stockage M10 que comporte l'automate programmable 9 et dans laquelle la valeur T1-1 est enregistrée.

En somme, une fois que le compteur de temps 10 sélectionne le compteur (11 à 17) adapté au débit, on compare la valeur contenu dans la mémoire M10 c'est-à-dire (T1-1) à la valeur de (T1) actuelle et si cette dernière est inférieure ou égale à la valeur mémoire M10 plus un delta, notamment 30% alors le litre est comptabilisé par le compteur (11 à 17) sélectionné et on stocke la valeur de T1 dans la mémoire M10.

Dans le cas contraire, c'est-à-dire que T1 n'est pas compris dans l'intervalle de la mémoire M10, on stocke cette valeur (T1) dans M10 sans comptabilisé le litre consommé puisqu'il n'y pas eu répétition du débit et on réinitialise la valeur T1 du compteur 10.

Cette valeur mémoire M10 agi donc comme une marge de sécurité qui contrôle la répétition du débit à une valeur proche. En somme, l'intervalle de tolérance programmé, sur cette mémoire M10, par rapport au débit, permet d'accepter des fluctuations approchantes dudit débit, notamment à plus M10+30%, sans réinitialiser le compteur si le débit est dans cette marge de sécurité.

Plus précisément, dans le cas d'une chute du débit, mais que cette dernière n'est pas suffisamment importante, le compteur (11 à 17) ne sera pas réinitialisé bien que le débit soit inférieur à son intervalle de temps.

Le contrôle de la répétition permet de plus d'éviter de procéder à des coupures intempestives dû à l'ouverture et à la fermeture répétée de robinets au cours de la journée.

A titre d'exemple on présente le fonctionnement du compteur 11 sachant que tous les compteurs 11 à 17 fonctionnent selon le même schéma.

Le compteur 11 est incrémenté d'un litre si le temps T1 est compris dans l'intervalle de temps qui correspond au débit de ce compteur. Bien évident et tel que vu précédemment, il faut également que T1 soit compris dans l'intervalle de la mémoire M10. Le temps T1 restant toujours dans l'intervalle de temps du compteur 11 c'est uniquement celui-ci qui est incrémenté s'il y a une répétition du débit.

Ainsi, tel qu'expliqué précédemment le premier litre n'est pas incrémenté par le compteur pour éviter les coupures intempestives. Il faut, en effet, qu'il y est une répétition du débit.

Lorsque le compteur 11 d'impulsions atteint sa valeur de seuil de fuite S1, mémorisée dans la mémoire M de ce compteur 11, il déclenche via une première sortie et une porte logique « OU » l'allumage du voyant de fuite 19 et affiche sur l'afficheur LCD 22 « fuite » ou un autre message d'état du dispositif. Tous les compteurs 11 à 17 sont reliés à cette porte « OU » et permettent ainsi l'allumage de ce voyant 19 si leur valeur de seuil S1 est atteinte.

Préférentiellement lorsqu'un des compteurs 11 à 17 atteint cette valeur S1 le voyant de fuite 19 clignote pour indiquer que la fuite est minime, la fréquence du clignotement étant proportionnelle à la fuite.

Si la situation de « fuite » n'est pas résolue le compteur 11 peut atteindre le seuil alarme/coupure S2. Si ce seuil S2 est atteint, le compteur 11 va, par une seconde sortie et l'intermédiaire de deux portes « OU », faire clignoter le voyant alarme/coupure 20 et afficher sur le LCD 22 l'état du dispositif. Ce seuil prévient l'utilisateur ou l'opérateur de la coupure imminente de l'approvisionnement du réseau 6

Avantageusement et suite à un appui prolongé sur le bouton marche/arrêt lors de la mise en route du dispositif une protection partielle est enclenchée via le circuit 30 et/ou 31 de celui-ci. Cette protection permet, notamment, pour les compteurs 16 et 17 de signaler les fuites sur celui-ci, mais en aucun cas de procéder à une alarme ou à une coupure du réseau 6 le débit étant très faible.

Enfin si le dispositif n'est pas stoppé par un utilisateur ou que le problème n'est pas résolu, le compteur 11 peut atteindre sa dernière valeur de seuil S3, dit seuil de coupure. Dans ce cas là une troisième sortie du compteur 11 va allumer, de manière permanente, le voyant alarme/coupure 20 et éteindre le voyant surveillance 19. De plus l'électrovanne 5 est fermée pour empêcher le passage de l'eau et ainsi protéger le réseau 6.

L'automate 9 enregistre dans sa mémoire les valeurs d'état de chaque compteur 11 à 17 pour faciliter la maintenance du dispositif.

Plus particulièrement l'automate programmable 9 enregistre :
- toutes les valeurs courantes et maximum atteintes des compteurs 11 à 17 ;
- le nombre de coupures engendrées par l'arrosage ;
- le nombre de coupures engendrées par les compteurs 11 à 17 de débits ;
- le nombre de départs d'arrosage ;
- le nombre d'alarmes consommations.

Selon un mode d'exécution de l'invention si le débit ralenti et que l'on passe dans un intervalle de temps mesuré par le compteur 10 supérieur à l'intervalle de temps du compteur 11, alors c'est le compteur 12 qui est sélectionné, et on réinitialise le compteur 11. Ainsi on comprend bien que lors d'un ralentissement progressif du débit, voire d'un arrêt d'approvisionnement du réseau 6, on effectue une remise à zéro en cascade des compteurs d'impulsions 11 à 17.

Bien entendu, comme expliqué précédemment le compteur 11 n'est remis à zéro que si la valeur du débit à suffisamment chutée, c'est-à-dire qu'elle est supérieure à la mémoire M10 plus l'intervalle réglé, notamment 30%.

A l'inverse, si le débit accélère, les compteurs d'impulsions 11 à 17 ne sont pas réinitialisés.

Avantageusement le dispositif permet par une pression sur le bouton RESET d'initialiser les compteurs 11 à 17 et d'éteindre les voyants 19, 20.

Selon un mode de réalisation particulier du dispositif, il autorise un fonctionnement en marche forcée pour le remplissage d'une piscine ou similaire. Ce mode de fonctionnement est sélectionnable par le bouton marche forcée 25 situé, soit sur l'automate programmable 9, soit sur le boitier déporté des moyens d'affichages 4, d'ailleurs l'automate programmable 9 comprend un compteur d'impulsions 27 supplémentaires dit compteur 27 de marche forcée.

Lors de l'appui sur ce bouton 25 l'utilisateur ou l'opérateur peut choisir la durée de cette marche forcée, sur une durée maximum de 48h par tranches de 3h. Il peut également limiter la marche forcée en réglant un seuil S de volume maximum à atteindre.

Avantageusement pour indiquer que le dispositif est en marche forcée les voyants fuite 20 et alarme/coupure 21 clignotent en alternance.

Tout particulièrement, à chaque litre consommé, l'impulsion émise par le compteur d'eau 7 arrive directement sur le compteur d'impulsions 27 de marche forcée.

Si la durée ou le seuil S est atteint la marche forcée du dispositif est arrêtée, les voyants 20, 21 sont éteints et le dispositif est remis dans l'état où il était avant l'appui sur le bouton marche forcée c'est-à-dire soit arrêté, soit en marche ou surveillance. Si une fuite existait en marche forcée, sa détection est uniquement retardée jusqu'au passage en surveillance puisque les compteurs 11 à 17 ne comptent plus les impulsions en marche forcée mais ne sont pas remis à zéro.

Dans une application avantageuse lorsque un appareil d'arrosage automatique d'un particulier ou d'un immeuble collectif est relié au dispositif 1. Le fonctionnement en mode arrosage automatique est signalé par l'allumage du voyant d'arrosage automatique 18 et le clignotement du voyant de surveillance 21 durant tout l'arrosage automatique.

Plus particulièrement un programmateur d'arrosage 28 quelconque peut être raccordé au dispositif de détection de fuites via deux fils, qui vont simplement envoyer un signal lors d'un départ de cycle d'arrosage. Ledit programmateur d'arrosage envoie un signal du départ du cycle d'arrosage au dispositif

Avantageusement le dispositif comprend un compteur d' impulsions d'arrosage automatique. Si l'on dépasse le premier seuil du compteur 29 le voyant 19 clignote pour alerter d'une fuite. Lorsque l'on atteint le deuxième seuil (seuil de coupure) le voyant alarme/coupure 20 est allumé et une coupure sur le réseau 6 est appliquée au travers de l'électrovanne 5. On peut réarmer le dispositif par une pression sur le bouton RESET.

Si aucun problème n'est signalé durant l'arrosage automatique le dispositif repasse automatiquement en mode surveillance du réseau 6 à la fin du cycle d'arrosage.

Préférentiellement les compteurs 11 à 17 sont désactivés pour éviter les coupures intempestives du dispositif lors des départs de l'arrosage, mais ne sont pas remis à zéro.

Selon un mode optionnel le dispositif peut recevoir les impulsions d'un second compteur réservé à l'arrosage, la surveillance dans ce cas-là est plus précise. En effet lors d'un départ d'arrosage, le dispositif continu de compter les impulsions sur un des compteurs de débits 11 à 17, mais déduit celles venant de l'émetteur d'impulsion (compteur d'arrosage), et compte celles de l'arrosage sur le compteur 29 de volume prévu pour l'arrosage. Les fuites sont donc surveillées sur les deux réseaux avec distinction.

Selon encore un autre mode de réalisation, le dispositif selon l'invention permet de localiser les zones du réseau d'où provient la fuite, à savoir de déterminer avec exactitude la portion de tuyauterie qui fuit.

Pour ce faire, le système incorpore au moins une combinaison d'un compteur et d'un émetteur sur chaque zone du réseau à surveiller.

En reprenant l'exemple précédemment évoqué, il est possible de positionner une telle combinaison sur le réseau de manière à définir des zones de détection de plus en plus limitée et précises. En particulier, une première combinaison peut définir la globalité du réseau, une seconde positionnée en aval peut définir une zone intérieure, notamment l'intérieur de l'habitation, tandis qu'une troisième combinaison, ou bien le différentiel avec la première, peut définir la zone extérieure, notamment le jardin. Il en va de même à l'intérieur de la zone correspondant à l'habitation, par étage ou par pièce, comme la salle de bain, les toilettes ou la cuisine. D'autres combinaisons peuvent être envisagées de manière similaire à l'extérieur, pour définir des zones correspondant à l'arrosage automatique ou manuel ou bien les points d'eau, bassins ou piscine.

Plus particulièrement, l'invention peut prévoir de calculer le différentiel existant entre au moins deux combinaisons successives. Pour ce faire, on effectue la différence des débits entre ces deux combinaisons pour obtenir une valeur qui, si elle n'est pas égale à zéro, met en évidence une fuite sur le réseau.

Si la valeur obtenue est supérieure ou égale à un seuil fixé, alors la fuite se situe entre les deux combinaisons. A l'inverse, si la valeur calculée est strictement inférieure audit seuil, alors la fuite se situe après la combinaison située le plus en aval.

Il en va de même si une première combinaison est située en entrée et dont la valeur sert de référence, à cette dernière étant soustraites les valeurs de plusieurs combinaisons, notamment définissant des zones telles que précédemment décrit.

Par ailleurs, l'invention prévoit des erreurs dans les calculs et les mesures des différentes combinaisons, notamment l'impulsion des émetteurs qui peut être différentes en fonction de la valeur métrologique de chaque émetteur, de l'usure ou de l'encrassement de chacun d'entre eux. Des telles erreurs, même minimes de l'ordre du millilitre, peuvent engendrer une accumulation dans le temps de manière à générer une interprétation erronée, déduisant une fuite au sein du réseau alors qu'il n'y en a pas réellement.

Afin de pallier les inconvénients liés à ces erreurs provoquant un déclenchement intempestif de l'alarme, l'invention comporte sur l'automate programmable (?) un compteur T9 qui, arrivé à une valeur maximale donnée, commande la réinitialisation de tous les autres compteurs desdites combinaisons.

L'invention concerne encore un procédé de mise en oeuvre du dispositif de détection de fuite d'eau sur le réseau d'approvisionnement en eau caractérisé par le fait qu'il consiste en :
- on mesure le temps (t) d'une impulsion correspondant une quantité consommée ;
- on sélectionne le compteur (11 à 17) correspondant à cette valeur de ce temps (t) ;
- on compare cette valeur de temps (t) à une valeur de temps stockée dans une mémoire (M10);
- soit la valeur de temps (t) est inférieure ou égale à cette valeur mémoire (M10), et on incrémente le compteur (11 à 17) correspondant de la quantité consommée et on sauvegarde la valeur de temps (t) dans la mémoire (M10);
- soit la valeur de temps (t) est supérieure à cette valeur mémoire (M10), et on sauvegarde la valeur de temps (t) dans la mémoire (M10) qui sert au calcul de la valeur référence de la prochaine mesure de temps (t) de l'impulsion.

Selon une détail du procédé la valeur de temps (t) stockée en mémoire correspond à la valeur de temps (t) de l'impulsion précédente augmentée d'un delta prédéfini.

## Revendications

1. Dispositif de détection d'une fuite d'eau dans un réseau, comprenant un compteur d'eau (7), un émetteur d'impulsions (8) conçu apte à transmettre des informations, lues sur ledit compteur (7), à des moyens de traitement des données (3), **caractérisé par le fait que** lesdits moyens de traitement des données (3) comportent, d'une part, au moins deux compteurs d'impulsions (11, 12, 13, 14, 15, 16, 17) conçus aptes à fonctionner selon une valeur donnée de débit du réseau et, d'autre part, des moyens de mesure dudit débit du réseau (6) aptes à permettre de sélectionner le compteur (11, 12, 13, 14, 15, 16, 17) adapté au débit mesuré, et **par le fait que** les moyens de mesure du débit du réseau (6) consistent en un compteur de temps (10) conçu apte à mesurer le temps (t) de réception d'une impulsion d'une quantité consommée, tandis que lesdits moyens de traitement des données (3) consistent en des moyens conçus aptes à sélectionner le compteur (11 à 17) en fonction de cette mesure de temps (t), puis à comparer ladite mesure de temps avec une valeur en mémoire (M10) qui consiste en la valeur de temps (t) de réception de l'impulsion précédente, augmentée d'un delta.

2. Dispositif selon l'une quelconque des revendications précédentes, **caractérisé par** le fait les moyens de traitement des données (3) sont constitués par un automate programmable (9) comportant sept compteurs d'impulsions (11, 12, 13, 14, 15, 16, 17), chacun étant associés à une valeur donnée du débit du réseau (6).

3. Dispositif selon l'une quelconque des revendications précédentes, **caractérisé par le fait que** les moyens de mesure (3) pour mesurer le débit du réseau (6) sont constitués d'un compteur d'eau (7) équipé d'un totalisateur dont l'aiguille est munie d'une cible et sur lequel on vient raccorder, par des moyens adaptés, un émetteur d'impulsions (8).

4. Dispositif selon l'une quelconque des revendications précédentes, **caractérisé par le fait qu'**il comprend un raccordement adapté pour la fixation de l'émetteur d'impulsions (8) sur le compteur d'eau (7).

5. Dispositif selon l'une quelconque des revendications précédentes, **caractérisé par** le fait les moyens (3) pour le traitement des données peuvent être constitués préférentiellement par un automate programmable (9).

6. Dispositif selon l'une quelconque des revendications précédentes, **caractérisé par le fait que** les moyens (3) de traitement sont constitués d'un ensemble de cartes électroniques avec un programme figé effectuant les mêmes opérations que l'automate programmable (9).

7. Dispositif selon l'une quelconque des revendications précédentes, **caractérisé par le fait qu'**il comporte au moins une combinaison d'un compteur et d'un émetteur sur chaque zone du réseau à surveiller.

8. Dispositif selon la revendication précédente, **caractérisé par le fait qu'**il calcule le différentiel existant entre au moins deux combinaisons successives, en effectuant la différence des débits entre ces deux combinaisons pour obtenir une valeur qui, si elle n'est pas égale à zéro, met en évidence une fuite sur le réseau.

9. Procédé de mise en oeuvre du dispositif de détection de fuite selon l'une quelconque des revendications précédentes, **caractérisé par le fait qu'**il consiste en :
- on mesure le temps (t) d'une impulsion correspondant une quantité consommée ;
- on sélectionne le compteur (11 à 17) correspondant à cette valeur de ce temps (t) ;
- on compare cette valeur de temps (t) à une valeur de temps stockée dans une mémoire (M10);
- soit la valeur de temps (t) est inférieure ou égale à cette valeur mémoire (M10), et on incrémente le compteur (11 à 17) correspondant de la quantité consommée et on sauvegarde la valeur de temps (t) dans la mémoire (M10);
- soit la valeur de temps (t) est supérieure à cette valeur mémoire (M10), et on sauvegarde la valeur de temps (t) dans la mémoire (M10) qui sert au calcul de la valeur référence de la prochaine mesure de temps (t) de l'impulsion.

10. Procédé selon la revendication précédente, **caractérisé par le fait que** la valeur de temps (t) stockée en mémoire correspond à la valeur de temps (t) de l'impulsion précédente augmentée d'un delta prédéfini.

## Patentansprüche

1. Vorrichtung zum Detektieren eines Wasserlecks in einem Wassernetz, umfassend einen Wasserzähler (7), einen Impulssender (8), der geeignet vorgesehen ist, um an diesem Zähler (7) abgelesene Informationen an Datenverarbeitungsmitteln (3) zu senden, **dadurch gekennzeichnet, dass** die besagten Datenverarbeitungsmittel (3) einerseits wenigstens zwei Impulszähler (11, 12, 13, 14, 15, 16, 17), die geeignet vorgesehen sind, um gemäß einem gegebenen Durchflussmengenwert des Wassernetzes zu arbeiten, und andererseits Mittel zum Messen der besagten Durchflussmenge des Wassernetzes (6), die geeignet sind, um es zu erlauben, den für die gemessene Durchflussmenge angepassten Zähler (11, 12, 13, 14, 15, 16, 17) zu wählen, umfassen, und dadurch, dass die Mittel zum Messen der Durchflussmenge des Wassernetzes (6) aus einem Zeitzähler (10) bestehen, der geeignet vorgesehen ist, um die Zeit (t) zum Empfangen eines Impulses einer verbrauchten Menge zu messen, während die besagten Datenverarbeitungsmittel (3) aus Mitteln bestehen, die geeignet sind, um den Zähler (11 bis 17) abhängig von dieser Zeitmessung (t) zu wählen, anschließend die besagte Zeitmessung mit einem Wert in einem Speicher (M10) zu vergleichen, der aus dem Wert der Zeit (t) zum Empfangen des vorgehenden Impulses, zuzüglich eines Deltawertes, bestehet.

2. Vorrichtung nach irgendeinem der vorgehenden Ansprüche, **dadurch gekennzeichnet, dass** die Datenverarbeitungsmittel (3) aus einer programmierbaren Logik-Kontrolleinheit (9) besteht, die sieben Impulszähler (11, 12, 13, 14, 15 16, 17) umfasst, von denen jeder einem gegebenen Durchflussmengenwert des Wassemetzes (6) zugeordnet ist.

3. Vorrichtung nach irgendeinem der vorgehenden Ansprüche, **dadurch gekennzeichnet, dass** die Messmittel (3) zum Messen der Durchflussmenge des Wassemetzes (6) aus einem Wasserzähler (7) bestehen, der mit einem Zusammenzähler versehen ist, dessen Nadel mit einem Ziel versehen ist und an den ein Impulssender (8) über angepasste Mittel angeschlossen wird.

4. Vorrichtung nach irgendeinem der vorgehenden Ansprüche, **dadurch gekennzeichnet, dass** sie einen angepassten Anschluss für die Befestigung des Impulssenders (8) an den Wasserzähler (7) umfasst.

5. Vorrichtung nach irgendeinem der vorgehenden Ansprüche, **dadurch gekennzeichnet, dass** die Datenverarbeitungsmittel (3) bevorzugt aus einer programmierbaren Logik-Kontrolleinheit (9) bestehen können.

6. Vorrichtung nach irgendeinem der vorgehenden Ansprüche, dadurch gekenntzeichnet, dass die Datenverarbeitungsmittel (3) aus einem Satz von elektronischen Karten mit einem festgelegten Programm besteht, die dieselben Vorgänge als die programmierbare Logik-Kontrolleinheit (9) durchführen.

7. Vorrichtung nach irgendeinem der vorgehenden Ansprüche, **dadurch gekennzeichnet, dass** sie wenigstens eine Kombination eines Zählers und eines Senders auf jedem Bereich des zu überwachenden Wassemetzes umfasst.

8. Vorrichtung nach dem vorgehenden Anspruch, **dadurch gekennzeichnet, dass** sie das zwischen wenigstens zwei auf einander folgenden Kombinationen bestehende Differential berechnet, indem der Unterschied der Durchflussmengen zwischen diese zwei Kombinationen berechnet wird, um einen Wert zu erhalten, der, wenn er nicht gleich Null ist, auf ein Wasserleck im Wassernetz hindeutet.

9. Verfahren zum Anwender der Vorrichtung zum Detektieren eines Wasserlecks nach irgendeinem der vorgehenden Ansprüche, **dadurch gekennzeichnet, dass** es darin besteht, dass:
- die Zeit (t) eines Impulses, der einer verbrauchten Menge entspricht, bemessen wird;
- der Zähler (11 bis 17), der diesem Wert dieser Zeit (t) entspricht, gewählt wird;
- dieser Zeitwert (t) mit einem in einem Speicher (M10) gespeicherten Zeitwert verglichen wird ;
- entweder ist der Zeitwert (t) niedriger als oder gleich diesem Wert im Speicher (M10), und wird der Zähler (11 bis 17), der der verbrauchten Menge entspricht, erhöht und der Zeitwert (t) im Speicher (M10) gespeichert;
- oder ist der Zeitwert (t) höher als dieser Wert im Speicher (M10) und wird der Zeitwert (t) im Speicher (M10) gespeichert, welcher zum Berechnen des Bezugswertes für die nächsten Berechnung der Zeit (t) des Impulses dient.

10. Verfahren nach dem vorgehenden Anspruch, **dadurch gekennzeichnet, dass** der im Speicher gespeicherten Zeitwert (t) dem Zeitwert (t) des vorgehenden Impulses, zuzüglich eines vordefinierten Deltawertes, entspricht.

## Claims

1. Device for detecting a water leak in a network, comprising a water meter (7), an impulse transmitter (8) designed capable of transmitting information read from said meter (7) to data-processing means (3), wherein said data-processing means (3) include, on the one hand, at least two impulse counters (11, 12, 13, 14, 15, 16, 17) designed capable of operating according to a given flow-rate value of the network and, on the other hand, means for measuring said flow rate of the network (6) capable of permitting to select the counter (11, 12, 13, 14, 15, 16, 17) adapted for the measured flow rate, and wherein the means for measuring the flow rate of the network (6) are comprised of a time counter (10) designed capable of measuring the time (t) for receiving an impulse of a consumed quantity, while said data-processing means (3) are comprised of means capable of selecting the counter (11 to 17) depending on this time (t) measurement, then of comparing said time measurement with a value in memory (M10), which consists of the value of the time (t) for receiving the preceding impulse, increased with a delta.

2. Device according to any of the preceding claims, wherein the data-processing means (3) are comprised of a programmable logic controller (9) including seven impulse counters (11, 12, 13, 14, 15, 16, 17), each of which is associated with a given flow-rate value of the network (6).

3. Device according to any of the preceding claims, wherein the measuring means (3) for measuring the flow-rate of the network (6) are comprised of a water meter (7) provided with a totalizer, the needle of which is provided with a target and to which an impulse transmitter (8) is connected through adapted means.

4. Device according to any of the preceding claims, wherein it comprises a connection adapted for fastening the impulse transmitter (8) to the water meter (7).

5. Device according to any of the preceding claims, wherein the data-professing means (3) may preferably be comprised of a programmable logic controller (9).

6. Device according to any of the preceding claims, wherein the data-professing means (3) are comprised of a set of electronic cards with a locked program performing the same operations as the programmable logic controller (9).

7. Device according to any of the preceding claims, wherein it includes at least a combination of a counter and a transmitter on each area of the network to be monitored.

8. Device according to the preceding claim, wherein it calculates the differential existing between at least two successive combinations by calculating the difference of the flow rates between these two combinations in order to obtain a value that, when it is not equal to zero, point out a leak in the network.

9. Method for implementing the device for detecting a leak according to any of the preceding claim, wherein it consists in:
- measuring the time (t) of an impulse corresponding to a consumed quantity ;
- selecting the counter (11 to 17) corresponding to this value of this time (t) ;
- comparing this time value (t) with a time value stored in a memory (M10);
- either the time value (t) is lower than or equal to this value in memory (M10), and the counter (11 to 17) corresponding to the consumed quantity is incremented and the time value (t) is saved in the memory (M10);
- or the time value (t) is higher than this value in memory (M10) and the time value (t) is saved in the memory (M10), which serves for calculating the reference value for the next measurement of the time (t) of the impulse.

10. Method according to the preceding claim, wherein the time value (t) stored in the memory corresponds to the time value (t) of the preceding impulse increased with predefined delta.
